# EUROPÄISCHE PATENTSCHRIFT

(11) **EP 2 513 608 B1**
(45) Veröffentlichungstag und Bekanntmachung des Hinweises auf die Patenterteilung: **20.11.2013**
(21) Anmeldenummer: 10787723.5
(22) Anmeldetag: 25.11.2010
(51) Int. Cl.: F16H 59/10, G01D 5/14, G01D 11/24

(54) **VORRICHTUNG ZUR ERFASSUNG VON SCHALTPOSITIONEN**
APPARATUS FOR THE DETECTION OF SHIFTED POSITIONS
DISPOSITIF POUR DÉTECTER DES POSITIONS DE COMMUTATION

(30) Priorität: 16.12.2009 DE 102009054733; 28.04.2010 DE 102010028337
(43) Veröffentlichungstag der Anmeldung: 24.10.2012
(73) Patentinhaber: Robert Bosch GmbH, 70442 Stuttgart (DE)
(72) Erfinder: MAI, Frank, 71735 Eberdingen (DE); SEYED-KHOEI, Vahid, 70734 Stuttgart (DE)
(86) Internationale Anmeldenummer: PCT/EP2010/068260
(87) Internationale Veröffentlichungsnummer: WO 2011/082886

(56) Entgegenhaltungen:
- DE-A1-102006 059 741
- US-B1- 6 175 233

## Beschreibung

### Stand der Technik

DE 10 2006 059 741 A1 bezieht sich auf einen modular ausgebildeten Sensorträgeraufbau. Der Sensorträgeraufbau umfasst mindestens ein Grundgehäuse und mindestens ein davon getrennt hergestelltes Sensorträgermodul. Das Sensorträgermodul ist aus vergusskompatiblem Material gefertigt und mechanisch auf dem Grundgehäuse des Sensorträgeraufbaus befestigt.

Bei Anwendungen in Kraftfahrzeugen, insbesondere bei Positionssensoren für eine Getriebesteuerung, werden die Sensoren in Elektronikmodulen integriert verbaut. Positionssensoren an automatischen Getrieben müssen Umgebungstemperaturen zwischen -40°C und +150°C standhalten, ferner dem aggressiven Umgebungsmedium Getriebeöl (ATF = Automatic Transmission Fluid), hohen mechanischen Beanspruchungen bis zu 30g standhalten sowie metallischen Abriebbeziehungsweise Partikelbildungen im Getriebe widerstehen.

Die Medien- und Temperaturbeständigkeit wird in diesen Anwendungen durch eine ölresistente Verpackung der Elektronik sowie den Einsatz von Hochtemperaturleiterplatten gewährleistet. Aufgrund komplexer Anforderungen aus unterschiedlichen Getriebe-Topologien sowie Bauraum- und Funktionsanforderungen kommen unterschiedliche physikalische Messprinzipien zum Einsatz. Eine lineare Positionserfassung kann zum Beispiel auf Basis von Hall-Schaltern erfolgen. In diesem Zusammenhang werden ein oder mehrere digitale Hall-Schalter eingesetzt, die auf eine Leiterplatte derart angeordnet werden, dass sie die magnetische Codierung eines linear verschiebbaren multipolaren Dauermagneten erfassen. Ein Magnetschlitten ist mit dem linear betätigten Wählschieber, einem Hydraulikschieber in der Getriebesteuerplatte oder einem Parksperrenzylinder gekoppelt. Neben den Hall-Schaltern befinden sich auf der Leiterplatte Widerstände zur Darstellung von Diagnosefunktionen und EMV-Kondensatoren.

Die Sensorelektronik ist durch einen dichten, ölresistenten Epoxidharz-Verguß vor den Einflüssen des Getriebeöls geschützt. Bei einem Automatgetriebe mit manueller Schaltung, auch M-Schaltung genannt, erfasst der Positionssensor die Stellungen des Wählschiebers P, R, N, D, 4, 3 und 2 sowie die dazwischen liegenden Bereiche. Diese werden beispielsweise in Form eines 4-Bit-Codes an die Getriebesteuerung ausgegeben, wobei in diesem Fall der Einsatz von vier Hall-Schaltern erforderlich ist. Aus Sicherheitsgründen kann die Codierung der Positionsstellung einschrittig ausgeführt sein, das heißt, von Bereich zu Bereich ist nur ein Bit-Wechsel zulässig. Von einer Wählschieberposition zur nächsten wechseln immer zwei Bit, z.B. von P über die Zwischenstellung Z1 nach R. Durch Fehlfunktion verursachte einfache Bit-Wechsel können vom Steuergerät mittels Plausibilitätsbetrachtung als falsch erkannt werden. Der Aufbau derartiger Positionssensoren für Getriebesteuerungen ist aus der Publikation "Sensoren im Kraftfahrzeug", Robert Bosch GmbH, Ausgabe 2007, Fachwissen Kfz-Technik, Elektrik und Elektronik für Kfz, ISBN-10 3-7782-2031-4, Seiten 136-138 bekannt.

### Darstellung der Erfindung

Der erfindungsgemäß vorgeschlagenen Lösung folgend, wird zur Erhöhung der Erfassungsgenauigkeit vorgeschlagen, einen Luftspalt zwischen einem an einem Sensorgehäuse in lateraler Richtung verfahrbaren Magnetschlitten und einem in das Sensorgehäuse integrierten Sensorpackage dadurch zu minimieren, dass in das Material des Sensorgehäuses weichmagnetische Einlegeteile integriert sind. Durch die Einlegeteile wird der Magnetschlitten in Richtung des Sensorpackages gezogen, so dass sich der Luftspalt zwischen der Innenseite des entlang des Gehäuses in lateraler Richtung verfahrbaren Magnetschlittens und der diesem zuweisenden Seite des Sensorpackages, über den Fahrweg des Magnetschlittens gesehen, drastisch verringert.

Der Magnetschlitten, der entlang mindestens einer Führungsrippe am Sensorgehäuse des Sensors verfahrbar ist, weist auf der dem Sensorpackage zuweisenden Seite eine Anzahl von Magnetstreifen auf, die in das Kunststoffmaterial, aus dem der Magnetschlitten bevorzugt gefertigt wird, integriert sind. Die einzelnen Magnetstreifen enthalten einzelne Codierungsmuster, insbesondere Polübergänge und können an der Innenseite des Magnetschlittens, welche dem Sensorpackage des Sensorgehäuses des Sensors zuweist, beispielsweise durch Einzelrippen voneinander getrennt sein.

In fertigungstechnisch besonders einfacher Weise können die Einlegeteile bei der Herstellung des Sensorgehäuses unmittelbar in entsprechende Öffnungen im Sensorgehäuse eingelegt und vom Kunststoffmaterial während der Herstellung des Sensorgehäuses in einem Arbeitsgang umspritzt werden. Die Einlegeteile liegen unter Ausbildung eines minimalen Randabstandes zu einem Fenster im Sensorgehäuse, in welches das Sensorpackage integriert wird, bevor das Sensorgehäuse, zum Beispiel mit integrierter Stanzgitteranordnung und einem Sensorgehäuse von einem weiteren Material, so zum Beispiel PA-Kunststoffmaterial, fertigt umspritzt wird. Die Einlegeteile können insbesondere eine Höhe aufweisen, welche deren Breite um ein Mehrfaches übersteigt. Durch die Anordnung der Einlegeteile parallel zur Höhe des Fensters zur Aufnahme des Sensorpackages im Sensorgehäuse wird sichergestellt, dass der Luftspalt zwischen der Innenseite des verfahrbaren Magnetschlittens und der diesem zuweisenden Seite des Sensorpackages innerhalb des Sensorgehäuses genau dann minimiert wird, wenn der Magnetstreifen, auf dem die zu detektierenden Bit-Muster aufgebracht sind, entlang der diesem zuweisenden Seite des Sensorpackages verfährt.

In besonders vorteilhafter Weise erstrecken sich die Öffnungen zur Aufnahme der Einlegeteile, wie bereits erwähnt, parallel zur Höhe des Fensters, insbesondere zwischen den hochkantorientierten Seiten des Fensters und Öffnungen, die zur Ausbildung von Verkrallungen zwischen dem Sensorgehäuse und einer dieses gegebenenfalls umgebenden weiteren Kunststoffschicht dienen.

Während das Sensorgehäuse aus einem Kunststoffmaterial wie zum Beispiel PPS (Polyphenylsulfid) gefertigt wird, welches eine sehr hohe Formstabilität aufweist, kann das es gegebenenfalls zum Schutz des Sensorpackages und zum Schutz eines Stanzgitters auch aus einem preiswerten Kunststoffmaterial wie zum Beispiel PA (Polyamid) gefertigt werden.

Neben der Ausführungsmöglichkeit, die Einlegeteile unmittelbar bei der Herstellung des Sensorgehäuses aus PPS in entsprechende Öffnungen einzuspritzen, besteht auch die Möglichkeit, im Spritzgießprozess des Sensorgehäuses aus PPS-Material Öffnungen vorzusehen, in welche in einem nachträglichen Arbeitsgang die Einlegeteile verklebt, verstemmt oder anderweitig fixiert werden können. Die Fixierung der Einlegeteile in den entsprechenden Öffnungen neben dem Fenster zur Aufnahme des Sensorpackages im Sensorgehäuse ist so zu gestalten, dass durch Temperaturänderungen induzierte Wärmedehnungen die Genauigkeit der Position der Einlegeteile nicht beeinträchtigen. Es ist zu berücksichtigen, dass das Sensorgehäuse des erfindungsgemäß vorgeschlagenen Sensors, der insbesondere zur Erfassung der Position eines Wählhebels einer Steuerung eines automatischen Getriebes dient, in einem Temperaturbereich zwischen -40°C und +150°C betrieben wird. Den bei diesen enormen Temperaturschwankungen auftretenden Dehnungen des Sensorgehäuses des erfindungsgemäß vorgeschlagenen Sensors ist bei der Dimensionierung der Öffnungen zur Aufnahme der Einlegeteile Rechnung zu tragen, um eine Funktionsfähigkeit, das heißt, eine Minimierung des Luftspaltes bei Bewegungen des Wählhebels eines automatischen Getriebes über die Lebensdauer gesehen, sicherzustellen.

### Kurze Beschreibung der Zeichnungen

Anhand der Zeichnungen wird die Erfindung nachstehend eingehender beschrieben.

Es zeigt:
- Figur 1: ein Sensorgehäuse eines Sensors mit darin beweglich aufgenommenen Magnetschlitten,
- Figur 2: eine Ansicht der Innenseite des im Sensorgehäuse gemäß der Darstellung in Figur 1 lateral bewegbaren Magnetschlittens,
- Figur 3: eine Draufsicht auf das in Figur 1 vom im Sensorgehäuse aufgenommenen verfahrbaren Magnetschlitten überdeckte Sensorfenster,
- Figur 4: eine Darstellung der Anordnung der Einlegeteile und der Ausbildung eines minimalen Randabschnittes neben dem Fenster zur Aufnahme des Sensorpackages und
- Figur 5: den entlang eines Verfahrwegs am Sensorgehäuse verfahrbaren Magnetschlitten, wobei eines der Einlegeteile gerade noch frei liegt.

### Ausführungsvarianten

Für die nachstehende Beschreibung gilt, dass das Sensorgehäuse 12 des erfindungsgemäß vorgeschlagenen Sensors 10 aus einem Kunststoffmaterial, welches eine hohe Formstabilität aufweist, gefertigt wird. Dafür hat sich Polyphenylsulfid (PPS) bewährt. Eine den Sensor 10 beziehungsweise das Sensorgehäuse 12 und die darin aufgenommene, das Stanzgitter 16 sowie das Sensorpackage 72 überdeckende Kunststoffumspritzung, wird vorzugsweise aus einem preiswerteren Kunststoffmaterial wie zum Beispiel Polyamid (PA) gefertigt. Statt dem Stanzgitter 16 ist aber auch jede andere für die elektrische Kontaktierung geeignete Verbindungstechnik möglich.

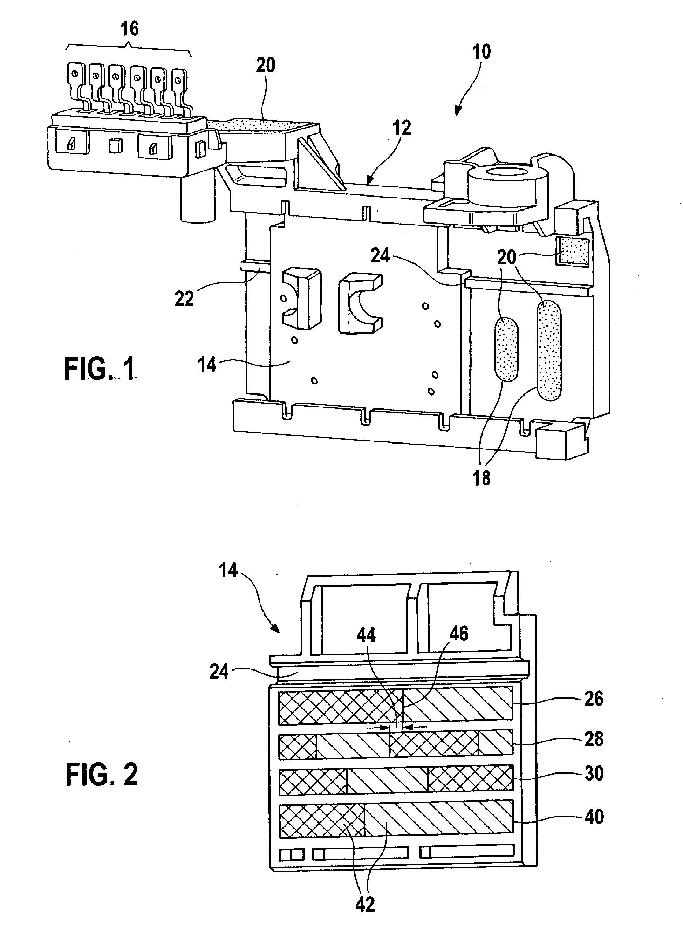

Der Darstellung gemäß Figur 1 ist ein Sensorgehäuse zu entnehmen, an dem ein Magnetschlitten verfahrbar ist. In diesem Ausführungsbeispiel werden beispielsweise vier Hall-Schalter im Sensorpackage 72 im Sensorgehäuse 12 eingesetzt, so dass das Sensorsignal in Form eines 4-Bit-Codes ausgegeben wird.

Aus der Darstellung gemäß Figur 1 ergibt sich, dass ein Sensor 10 ein Sensorgehäuse 12 umfasst, welches aus einem formstabilen Kunststoff wie zum Beispiel Polyphenylsulfid (PPS) gefertigt wird. Am Sensorgehäuse 12 ist in lateraler Richtung ein Magnetschlitten verfahrbar. Aus dem Sensorgehäuse 12 ragt eine Kontaktierung 16 eines in das Sensorgehäuse integrierten Stanzgitters hervor. Im Sensorgehäuse 12 sind Öffnungen 18 vorgesehen, in welche bei einem weiteren Umspritzungsvorgang eine PA-Umspritzung 20 (PA = Polyamid) Verkrallungspunkte bildet. Dies bedeutet, dass die Öffnungen 18 bei einem weiteren Umspritzungsvorgang des Sensorgehäuses 12 mit darin aufgenommenem, hier in Figur 1 nicht dargestelltem Sensorpackage 72 und integriertem Stanzgitter von Kunststoffmaterial, insbesondere Polyamid, umspritzt werden, welches im fließfähigen Zustand durch die Öffnungen 18 hindurchtritt und auf diese Weise eine form- und stoffschlüssige Verbindung zwischen dem Sensorgehäuse 12 des Sensors 10 bildet.

Der Darstellung gemäß Figur 1 ist des Weiteren entnehmbar, dass sich auf der Innenseite des Sensorgehäuses 12, dem verfahrbar an diesen angeordneten Magnetschlitten 14 zuweisend, eine Führungsrippe 22 erstreckt. Die Führungsrippe 22 ragt in die Führungsnut 24 des Magnetschlittens 14 hinein. Die Führungsrippe 22 des Sensorgehäuses 12 und die Führungsnut 24 an der Innenseite des Magnetschlittens 14 sind in zueinander komplementärer Geometrie ausgebildet.

Der Darstellung gemäß Figur 2 ist eine Draufsicht auf die Innenseite des Magnetschlittens 14, der verfahrbar am Sensorgehäuse 12 gemäß Figur 1 aufgenommen ist, zu entnehmen.

Aus der Darstellung gemäß Figur 2 geht hervor, dass sich an der Innenseite des Magnetschlittens 14 im Wesentlichen parallel zueinander erstreckende Magnetstreifen 26, 28, 30 und 40 befinden. Ein jeder der Magnetstreifen 26, 28, 30 und 40 trägt ein Codierungsmuster 42. Ein jedes der Codierungsmuster 42 eines jeden der Magnetstreifen 26, 28, 30 und 40 unterscheidet sich voneinander und enthält mindestens einen Polübergang 46.

In Bezug auf den ersten Magnetstreifen 26 sowie den zweiten Magnetstreifen 28 an der Innenseite des Magnetschlittens 14 ist festzuhalten, dass die Nord-Süd-Polübergänge auf den einzelnen Magnetstreifen im Allgemeinen unabhängig von der Lage der Polübergänge der Nachbarstreifen ist. Eine Überlappung 44 kann auftreten, wenn Bereiche Nord-Nord und/oder Süd/Süd nebeneinander liegen. Zwischen den Magnetstreifen 26, 28, 30, 40 ist die Umspritzung aus nichtmetallischem Werkstoff hergestellt. Die Übergänge zwischen dem Nord- und Südpol eines Magnetstreifens 26, 28, 30, 40 werden von einem Hall IC detektiert. Je nach Lage der Pole wird ein 4-Bit-Signal ausgegeben, so zum Beispiel wenn der Wählhebel auf Position P steht, wird entsprechend ein Code 0010 generiert.

Aus der Darstellung gemäß Figur 2 geht hervor, dass die Magnetstreifen 26, 28, 30 und 40 eine voneinander verschiedene Höhe aufweisen können und voneinander jeweils durch Kunststoffstege getrennt sein können.

An der Innenseite des Magnetschlittens 14 gemäß der Draufsicht in Figur 2 verläuft die Führungsnut 24, die mit der Führungsrippe 22 des Sensorgehäuses 12 des Sensors 10 zusammenwirkt.

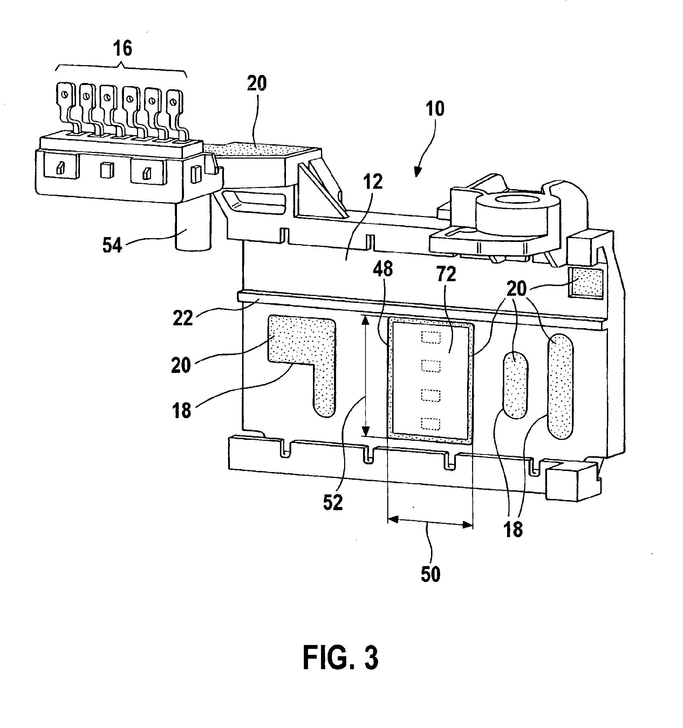

Der Darstellung gemäß Figur 3 ist eine perspektivische Draufsicht auf das Sensorgehäuse des Sensors zu entnehmen, in der der Magnetschlitten entfernt ist.

Figur 3 zeigt, dass im Sensorgehäuse 12 zwischen den Öffnungen 18 zur Ausbildung der Verkrallungen zwischen der PA-Umspritzung 20 und dem Sensorgehäuse 12 ein Fenster 48 ausgebildet ist. Aus der perspektivischen Darstellung gemäß Figur 3 geht hervor, dass das Fenster 48, welches der Aufnahme eines Sensorpackages 72 dient, eine Breite 50 aufweist, die in der Darstellung gemäß Figur 3 etwas geringer bemessen ist als eine Höhe 52 des Fensters 48.

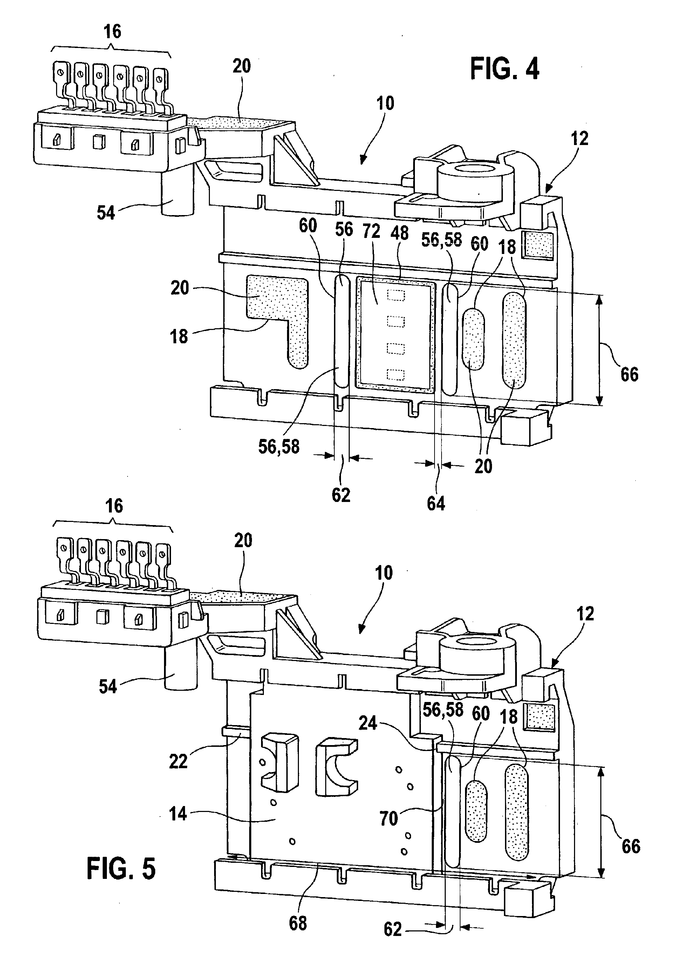

Die in Figur 4 dargestellten Aufnahmeöffnungen 60 für weichmagnetische Einlegeteile 56 werden in dem Sensorgehäuse 12 gemäß der Darstellung in Figur 3 parallel zur Höhe 52 des Fensters 48 ausgebildet. Dies erlaubt die Einhaltung eines minimalen Abstandes zur Höhenkante 52 des Fensters 48 in Bezug auf die Öffnungen 18 in der Wand des Sensorgehäuses 12, in denen die PA-Umspritzung 20 Verkrallungspunkte beziehungsweise Verkrallungselemente ausbildet.

Wenngleich in der Darstellung gemäß Figur 3 das Fenster 48 eine im Wesentlichen rechteckige Geometrie hat und dessen Höhe etwas größer bemessen ist als dessen Breite 50, kann das Fenster 48 auch eine größere Breite 50 in Bezug auf die Höhe 52 aufweisen. Dies richtet sich nach der Größe des jeweils zu montierenden Sensorpackages 72 sowie nach Erfordernissen hinsichtlich einer bestimmten Längeüberstreichung des Verfahrweges des Magnetschlittens 14 in Bezug auf das Sensorpackage 72.

Figur 4 zeigt eine Ausführungsvariante des Sensorgehäuses mit neben dem Fenster zur Aufnahme des Sensorpackages angeordneten Einlegeteilen.

Der Darstellung gemäß Figur 4 ist zu entnehmen, dass das dort dargestellte Sensorgehäuse 12 des Sensors 10 im Wesentlichen dem in Figur 3 dargestellten Sensorgehäuse 12 entspricht. Im Unterschied zur Darstellung gemäß Figur 3 verlaufen neben dem Fenster 48 zur Aufnahme des Sensorpackages 72 Aufnahmeöffnungen 60, die sich im Wesentlichen parallel zur Höhenkante des Fensters 48 erstrecken. Die Aufnahmeöffnungen 60 sind in einem minimierten Randabstand 64 in Bezug auf das Fenster 48 ausgebildet. Je geringer der Randabstand 64 zwischen den Aufnahmeöffnungen 60 für die Einlegeteile 56 in Bezug auf die Ränder des Fensters 48 gehalten werden kann, desto geringer wird der Luftspalt 70 zwischen der Innenseite des verfahrbaren Magnetschlittens 14 und der dieser zuweisenden Planseite des Sensorpackages 72.

In der Darstellung gemäß Figur 4 weisen die Aufnahmeöffnungen 60 zur Aufnahme der Einlegeteile eine im Wesentlichen langlochförmige Geometrie auf. Daneben sind auch andere Geometrien, wie zum Beispiel eine rechteckförmige Geometrie, möglich. Anstelle der in der Ausführungsvariante gemäß Figur 4 einstückig ausgebildeten Einlegeteile 56, können in die Aufnahmeöffnungen 60 auch andere Geometrien von Einlegeteilen, so zum Beispiel zylinderförmige oder stabförmige Geometrien, eingelassen sein. In einer möglichen Ausführungsvariante zur Befestigung der Einlegeteile 56 in den Aufnahmeöffnungen 60 können diese zum Beispiel bei einem Herstellprozess des Sensorgehäuses 12 in den Aufnahmeöffnungen 60 konfiguriert sein und vom Kunststoffmaterial, das heißt PPS-Material, vom Spritzgießwerkzeug umschlossen und somit unmittelbar in das Sensorgehäuse 12 integriert werden. Aufgrund der hohen Formstabilität des PPS-Materials sind die Einlegeteile 56 zuverlässig in den jeweiligen Aufnahmeöffnungen 60 fixiert.

Andererseits besteht auch die Möglichkeit, im Rahmen der Fertigung des Sensorgehäuses 12 lediglich die Aufnahmeöffnungen 60 vorzukonfektionieren und in einem nachfolgenden Arbeitsschritt die Einlegeteile 56 in diesen zu fixieren, so zum Beispiel einzukleben oder einzupressen.

Aus der Darstellung gemäß Figur 4 geht des Weitern hervor, dass beispielsweise eine Höhe 66 der Einlegeteile 56 deren Breite 62 um ein Mehrfaches übersteigt. Je größer die Erstreckung in vertikaler Richtung der Einlegeteile 56 ist, eine desto stärkere Minimierung des Luftspaltes 70 zwischen der Innenseite des Magnetschlittens 14 und der Langseite des Sensorpackages 72 lässt sich durch die erfindungsgemäß vorgeschlagene Lösung realisieren.

Aus der Darstellung gemäß Figur 4 ergibt sich zudem, dass die Aufnahmeöffnungen 60 für die Einlegeteile 56 besonders günstig zwischen den Öffnungen 18 für die spätere Ausbildung der Verkrallungspunkte der PA-Umspritzung 20 und den Hochkanträndern des Fensters 48 zur Aufnahme des Sensorpackages 72 platziert werden können. Bezugszeichen 54 bezeichnet eine Buchse, die gegebenenfalls ein Innengewinde aufweisen kann, zur Fixierung des Sensorgehäuses 12 am Gehäuse der Steuerung eines automatischen oder halbautomatischen Fahrzeuggetriebes. Die Einlegeteile 56 bestehen aus weichmagnetischen Material 58. Unter weichmagnetischen Material wird ferromagnetisches Material verstanden, das sich in einem Magnetfeld leicht magnetisieren lässt, aber im Unterschied zu hartmagnetischem Material kein Permanentmagnet ist. Ein Beispiel für weichmagnetisches Material ist Eisen.

Figur 4 zeigt, dass zum Beispiel die Oberseite des Sensorgehäuses 12 des Sensors 10 von der PA-Umspritzung 20 umschlossen ist und dass die PA-Umspritzung 20 auch bereits in die Öffnungen 18 in der Seitenfläche des Sensorgehäuses 12 eingeflossen ist und dort Verkrallungspunkte zur stoff- und formschlüssigen Verbindung zwischen der PA-Umspritzung 20 und dem bevorzugt aus PPS gefertigten Sensorgehäuse 12 ausbildet.
Der erfindungsgemäß vorgeschlagenen Lösung folgend wird insbesondere das Sensorpackage 72 derart in das Sensorgehäuse 12 integriert, dass dessen Planseite in der Ebene der Gehäuseseite des Sensorgehäuses liegt, das heißt, möglichst wenig erhaben über diese hervorsteht, was einer weiteren Minimierung des Luftspaltes 70 zwischen dem Magnetschlitten 14 und der Planseite des Sensorpackages 72 förderlich ist. Ein minimaler Luftspalt 70 zwischen der Innenseite des Magnetschlittens 14 und der Planseite des Sensorpackages 72 ist unbedingt beizubehalten, um ein Schleifen, das heißt mechanischen Kontakt zwischen der Innenseite des Magnetschlittens 14 und der Planseite des Sensorpackages 72 auf jeden Fall auszuschließen.

Der perspektivischen Darstellung gemäß Figur 5 ist zu entnehmen, dass in das Sensorgehäuse 12, welches analog zum Sensorgehäuse gemäß Figur 5 ausgebildet ist, ein Magnetschlitten 14 montiert ist. Der Magnetschlitten 14 enthält-wie in Figur 2 bereits beschrieben - auf einer der Planseite des Sensorpackages 72 zuweisenden Seite die Magnetstreifen 26, 28, 30 und 40, die jeweils Codierungsmuster 42 umfassen.

Wie aus der Darstellung gemäß Figur 5 hervorgeht, ist der Magnetschlitten 14 an der Führungsrippe 22 geführt und entlang eines durch Bezugszeichen 68 identifizierten Verfahrweg 68 relativ in Bezug auf das Sensorgehäuse verfahrbar.

Der Verfahrweg 68 ist in seiner seitlichen Ausdehnung so bemessen, dass dieser ausreicht, dass die unterschiedlichen Codierungsmuster 42 auf den Magnetstreifen 26, 28, 30, 40 und der Innenseite des Magnetschlittens 14 durch das Sensorpackage 72 sicher erkannt werden können.

Figur 5 ist des Weiteren zu entnehmen, dass die Position des Magnetschlittens 14 dort so gewählt ist, dass eine Seite des Magnetschlittens 14 eines der Einlegeteile 56, die aus weichmagnetischen Material 58 ausgebildet sind, gerade nicht überdeckt. Das von Magnetschlitten 14 Verdeckte der Einlegeteile 56, zieht Magnetschlitten 14 an das Sensorgehäuse 12 heran unter Ausbildung eines minimierten Luftspaltes 70.

Die Einlegeteile 56, bei denen es sich insbesondere um Teile aus weichmagnetischen Material 58 handelt, weisen eine Höhe 66 auf, die deren Breite 62 um ein Mehrfaches übersteigt. Die bevorzugt aus weichmagnetischen Material 58 beschaffenen Einlegeteile 56 beeinflussen nicht die Magnetstreifen 26, 28, 30, 40, die an der Innenseite des Magnetschlittens 14 ausgebildet sind, weil zwischen den Polübergängen in der Höhe des ICs und den Einlegeteilen 56 ein Sicherheitsabstand realisiert ist.

Auch das in Figur 5 dargestellte Sensorgehäuse 12 des Sensors 10 umfasst eine Stanzgitteranordnung, von der hier lediglich die Kontaktierungen 16 zu erkennen sind. Wie aus der Darstellung gemäß Figur 5 des Weiteren zu entnehmen ist, ist das Material der PA-Umspritzung 20 in die Öffnungen 18 an der Wand des Sensorgehäuses 12 verflossen unter Ausbildung von Verkrallungspunkten zwischen PA-Umspritzung 20 und dem Sensorgehäuse 12, welches in der Regel aus einem formstabilen Kunststoffmaterial wie zum Beispiel Polyphenylsulfid (PPS) hergestellt wird.

## Patentansprüche

1. Vorrichtung zur Erfassung einer Schaltposition, insbesondere einer Wählhebelposition einer Steuerung eines automatischen oder halbautomatischen Fahrzeuggetriebes mit einem Sensorgehäuse (12), an dem ein Sensorpackage (72) aufgenommen ist, und mit einem Magnetschlitten (14) der zu dem Sensorgehäuse relativ verfahrbar ist, dadurch gekennzeichlnet, dass ein Luftspalt (40) zwischen dem Sensorpackage (72) und einer diesem zuweisenden Seite des Magnetschlitten (14) durch in das Sensorgehäuse (12) eingelassene Einlegeteile (56) aus weichmagnetischen Material (58) minimiert ist.

2. Vorrichtung gemäß Anspruch 1, **dadurch gekennzeichnet, dass** die Einlegeteile (56) in einem minimierten Randabstand (64) zu einem Fenster (48) für das Sensorpackage (72) im Sensorgehäuse (12) angeordnet sind.

3. Vorrichtung gemäß Anspruch 2, **dadurch gekennzeichnet, dass** sich die Einlegeteile (56) parallel zur Höhe (52) des Fenster (48) im Sensorgehäuse (12) erstrecken.

4. Vorrichtung gemäß Anspruch 1, **dadurch gekennzeichnet, dass** der Magnetschlitten (14) an der dem Sensorpackage (72) zuweisenden Seite eine Anzahl von Magnetstreifen (26, 28, 30, 40) enthält.

5. Vorrichtung gemäß Anspruch 1, **dadurch gekennzeichnet, dass** eine Höhe (66) der Einlegeteile (56) deren Breite (62) um ein Mehrfaches übersteigt.

6. Vorrichtung gemäß Anspruch 1, **dadurch gekennzeichnet, dass** die Einlegeteile (56) im Wesentlichen in der dem Magnetschlitten (14) zuweisenden Ebene des Sensorgehäuse (12) liegen.

7. Vorrichtung gemäß Anspruch 1, **dadurch gekennzeichnet, dass** die Einlegeteile (56) in Aufnahmeöffnungen (60) im Sensorgehäuse (12) eingeklebt, eingepresst oder vom Material des Sensorgehäuses (12) einen Formschluss erzeugend, umspritzt sind.

8. Vorrichtung gemäß Anspruch 1, **dadurch gekennzeichnet, dass** die Einlegeteile (56) zwischen Öffnungen (18) für eine PA-Umspritzung (20) des Sensorgehäuses (12) und dem Fenster (48) für das Sensorpackage (72) angeordnet sind.

9. Verfahren zur Herstellung einer Vorrichtung zur Erfassung einer Schaltposition, insbesondere einer Wählhebelposition an einer Steuerung eines automatischen oder halbautomatischen Fahrzeuggetriebes, wobei ein Magnetschlitten (14) an einem Sensorgehäuse (12) verfahrbar ist, mit nachfolgenden Verfahrensschritten:
a) dem Herstellen des Sensorgehäuses (12) aus einem formstabilen Kunststoffmaterial insbesondere PPS unter Ausbildung eines Fensters (48) zur Aufnahme eines Sensorpackages (72),
b) dem Erzeugen von Aufnahmeöffnungen (60) neben dem Fenster (48),
c) dem Erzeugen von Öffnungen (18) zur Ausbildung von Verkrallungselementen oder Verkrallungspunkten einer PA-Umspritzung (20) während des Umspritzungsvorganges der montierten Baugruppe aus Sensorgehäuse (12), Stanzgitter (16) und Sensorpackages (72),
d₁) dem Umspritzten von Einlegeteilen (56) aus weichmagnetischen Material (58) während des Verfahrensschrittes a)
oder
d₂), dem Verpressen, Einkleben oder Verstemmung von Einlegeteilen (56) aus weichmagnetischen Material (58) in gemäß Verfahrensschritt c) erzeugte Aufnahmeöffnung (60) im Sensorgehäuse (12).

## Claims

1. Apparatus for detecting a shift position, in particular a selector lever position of a control apparatus for an automatic or semi-automatic vehicle transmission having a sensor housing (12) at which a sensor package (72) is accommodated, and having a magnet carriage (14) which can be moved in relation to the sensor housing, **characterized in that** an air gap (40) between the sensor package (72) and a side of the magnet carriage (14) facing the latter is minimized by insertion parts (56) which are let into the sensor housing (12) and are composed of soft-magnetic material (58).

2. Apparatus according to Claim 1, **characterized in that** the insertion parts (56) are arranged at a minimized peripheral distance (64) from a window (48) for the sensor package (72) in the sensor housing (12).

3. Apparatus according to Claim 2, **characterized in that** the insertion parts (56) extend parallel to the height (52) of the window (48) in the sensor housing (12).

4. Apparatus according to Claim 1, **characterized in that** the magnet carriage (14) contains a number of magnetic strips (26, 28, 30, 40) on the side facing the sensor package (72).

5. Apparatus according to Claim 1, **characterized in that** a height (66) of the insertion parts (56) exceeds the width (62) thereof by a multiple.

6. Apparatus according to Claim 1, **characterized in that** the insertion parts (56) are located essentially in the plane of the sensor housing (12) facing the magnet carriage (14).

7. Apparatus according to Claim 1, **characterized in that** the insertion parts (56) are bonded or pressed into receptacle openings (60) in the sensor housing (12) or are encapsulated by injection moulding by the material of the sensor housing (12) so as to form a form fit.

8. Apparatus according to Claim 1, **characterized in that** the insertion parts (56) are arranged between openings (18) for a PA injection moulding encapsulation (20) of the sensor housing (12) and the window (48) for the sensor package (72).

9. Method for manufacturing an apparatus for detecting a shift position, in particular a selector lever position on a controller of an automatic or semi-automatic vehicle transmission, wherein a magnet carriage (14) can be moved on a sensor housing (12), comprising the following method steps:
a) manufacture of the sensor housing (12) from a dimensionally stable plastic material, in particular PPS, by forming a window (48) for accommodating a sensor package (72),
b) generating receptacle openings (60) next to the window (48),
c) generating openings (18) in order to form hook elements or hook points of a PA injection moulding encapsulation (20) during the injection moulding encapsulation process of the mounted assembly composed of the sensor housing (12), punched grill (16) and sensor packages (72),
d₁) encapsulating insertion parts (56) made of soft-magnetic material (58) by injection moulding during the method step a)
or
d₂) pressing, bonding or caulking insertion parts (56) made of soft-magnetic material (58) into a receptacle opening (60), generated according to method step c), in the sensor housing (12).

## Revendications

1. Dispositif de saisie d'une position de commutation, en particulier de la position du levier de sélection de la commande d'une transmission automatique ou semi-automatique pour véhicule, le dispositif présentant
un boîtier de capteur (12) sur lequel est repris un ensemble de capteur (72) et
un coulisseau magnétique (14) apte à être déplacé par rapport au boîtier de capteur,
**caractérisé en ce que**
l'entrefer (40) entre l'ensemble de détecteur (72) et un côté du coulisseau magnétique (14) orienté vers lui est minimisé par des garnitures (56) en matériau magnétique doux (58) placées dans le boîtier de capteur (12).

2. Dispositif selon la revendication 1, **caractérisé en ce que** les garnitures (56) sont disposées à une distance minimisée (64) par rapport à la bordure d'une fenêtre (48) prévue pour l'ensemble de capteur (72) dans le boîtier de capteur (12).

3. Dispositif selon la revendication 2, **caractérisé en ce que** les garnitures (56) s'étendent parallèlement à la hauteur (52) de la fenêtre (48) ménagée dans le boîtier de capteur (12).

4. Dispositif selon la revendication 1, **caractérisé en ce que** le coulisseau magnétique (14) contient plusieurs rubans magnétiques (26, 28, 30, 40) sur son côté tourné vers l'ensemble de capteur (72).

5. Dispositif selon la revendication 1, **caractérisé en ce que** la hauteur (66) des garnitures (56) est un multiple de leur largeur (62).

6. Dispositif selon la revendication 1, **caractérisé en ce que** les garnitures (56) sont situées essentiellement dans le plan du boîtier de capteur (12) tourné vers le coulisseau magnétique (14).

7. Dispositif selon la revendication 1, **caractérisé en ce que** les garnitures (56) sont collées dans des ouvertures de reprise (60) ménagées dans le boîtier de capteur (12), y sont repoussées ou injectées en le matériau du boîtier de capteur (12) pour former une correspondance géométrique.

8. Dispositif selon la revendication 1, **caractérisé en ce que** les garnitures (56) sont disposées entre des ouvertures (18) d'une injection PA (20) du boîtier de capteur (12) et la fenêtre (48) prévue pour l'ensemble de capteur (72).

9. Procédé de fabrication d'un dispositif de saisie d'une position de commutation, en particulier de la position du levier de sélection de la commande d'une transmission automatique ou semi-automatique pour véhicule, un coulisseau magnétique (14) pouvant être déplacé par rapport au boîtier de capteur (12), le procédé présentant les étapes suivantes :
a) réaliser le boîtier de capteur (12) en une matière synthétique dimensionnellement stable, en particulier le PPS, en formant une fenêtre (48) de reprise d'un ensemble de capteur (72),
b) former des ouvertures de réception (60) à côté de la fenêtre (48),
c) former les ouvertures (18) de manière à réaliser des éléments d'accrochage ou des points d'accrochage d'une injection PA (20) pendant l'opération d'injection du module monté constitué du boîtier de capteur (12), d'une grille estampée (16) et d'ensembles de capteur (72),
d₁) pendant l'étape de traitement a), injecter de la matière autour de garnitures (56) en un matériau magnétique doux (58) ou
d₂) presser, coller ou bloquer les garnitures (56) en matériau magnétique doux (58) dans l'ouverture de réception (60) formée dans le boîtier de capteur (12) à l'étape c).
